# EUROPÄISCHE PATENTANMELDUNG

(11) **EP 3 640 484 A1**
(43) Veröffentlichungstag der Anmeldung: **22.04.2020**
(21) Anmeldenummer: 19203490.8
(22) Anmeldetag: 16.10.2019
(51) Int. Cl.: F16B 7/02, F16B 7/04, F16B 7/22

(54) **VERBINDUNGSANORDNUNG FÜR MINDESTENS ZWEI PROFILELEMENTE**

(30) Priorität: 16.10.2018 DE 202018105903 U
(71) Anmelder: RK Rose + Krieger GmbH Verbindungs- und Positioniersysteme, 32423 Minden (DE)
(72) Erfinder: BRAUN, Johann, 32369 Rahden (DE); BAKE, Henning, 63607 Wächtersbach (DE); NEUBAUR, Michael, 31655 Stadthagen (DE); AMON, Michael, 32469 Petershagen (DE); FRANKE, Jens, 31547 Rehburg-Loccum (DE); SCHEIBE, Jörg, 31655 Stadthagen (DE)
(74) Vertreter: Kleine, Hubertus

(57) **Zusammenfassung**

Die Erfindung betrifft eine Verbindungsanordnung für mindestens zwei Profilelemente, die sich dadurch auszeichnet, dass
- ein erstes der Profilelemente ein Rohrstück (10) ist, in das ein Gewindeeinsatz (11) eingesetzt ist, an dem ein in Richtung einer Längsachse des Rohrstücks (10) zentral aus dem Rohrstück (10) herausragender Zugbolzen (12) befestigt ist, und
- ein zweites der Profilelemente ein Gegenlager aufweist, wobei
- der Zugbolzen (12) derart in das Gegenlager eingreift, dass die beiden Profilelemente in Längsrichtung gegeneinander verspannt sind.

## Beschreibung

Die Erfindung betrifft eine Verbindungsanordnung für mindestens zwei Profilelemente, von denen mindestens eines ein Rohrstück ist, insbesondere zur Anwendung in einem hygienisch sensiblen Bereich in der Lebensmittelindustrie oder der chemischen oder pharmazeutischen Industrie.

Rohrmaterial wird häufig in Produktionsanlagen eingesetzt, beispielsweise um Gestelle, Treppen, Podeste, Absperrungen, Geländer, Schutzeinrichtungen, Sensorhalter o.ä. aufzubauen. Dabei sind Verbindungsanordnungen vorteilhaft, bei denen Rohrstücke, ggf. vor Ort geschnitten oder vorkonfektioniert, entweder unmittelbar oder mit Hilfe von Verbindungsstücken flexibel miteinander verbunden werden können.

Ein Verbindungssystem ist beispielsweise aus der Druckschrift DE 20 2005 013 777 U1 bekannt. Bei diesem Verbindungssystem werden Klemmverbinder mit Klemmbacken eingesetzt, die Rohre außen umgreifen. Systeme dieser Art werden vielfältig eingesetzt, weisen jedoch an den Klemmstellen und/oder an Schraubendurchführungen, mit denen die Klemmung erfolgt, häufig Spalte oder Vertiefungen auf, in denen sich Staub, Schmutz oder Produktionsmaterial absetzen und anlagern kann. Aus diesem Grund sind die genannten Verbinder nicht zum Einsatz in einem hygienisch sensiblen Bereich, beispielsweise innerhalb von Produktionsanlagen für Lebensmittel oder Arzneimittel, geeignet.

Aus der Druckschrift DE 91 14 257 U1 ist ein Rohrverbindersystem bekannt, bei dem ein in ein Rohr einsteckbares Anschlussstück eingesetzt wird, in dem eine Klemmwippe angeordnet ist. Die Klemmwippe kann mittels einer von außen quer in das Verbindungsstück eingeschraubten Schraube verschwenkt werden und greift mit einem freien Schenkel in eine Bohrung des aufgesteckten Rohres ein und legt das Rohr somit am Verbindungsstück fest. Gegenüber der zuvor genannten außen angeordneten Klemmvorrichtung zeichnet sich die innen liegende Klemmvorrichtung durch weniger äußere Kanten und Spalten aus. Dennoch sind insbesondere im Bereich der Bohrung, in die der freie Schenkel der Wippe von innen eingreift, Öffnungen vorhanden, die auch diese Art der Verbindungstechnik ungeeignet für den hygienisch sensiblen Anwendungsbereich macht.

Die Druckschrift DE 10 2015 219 187 A1 zeigt eine Verbindungsvorrichtung für zwei quer zueinander stehende Rohre. Ein Verbindungsstück greift mit einem ankerförmigen Kopfteil in eine Aussparung eines Rohres ein. In das andere Rohr ist ein Spannlager in Form eines Querbolzens in zwei Bohrungen eingesetzt. In diesen Querbolzen greift das Verbindungsstück so ein, dass das quer liegende Rohr durch das ankerförmige Kopfteil gegen das Ende des Rohrs mit dem Querbolzen bzw. ein in dieses eingesetztes Adapterstück verspannt wird. Zum Eingreifen benötigt der Verbindungsanker ein Gegenlager, das von dem Wandmaterial des quer liegenden Rohrs gebildet wird. Die Verbindungsvorrichtung eignet sich daher nicht zur Verbindung zweier axial zueinander ausgerichteter Rohre bzw. Rohrstücke, da bei diesen ein für den Anker benötigtes Gegenlager nicht vorhanden ist.

Eine weitere Verbindungsanordnung ist aus der Druckschrift DE 297 23 560 U1 bekannt. Hierbei werden Profilstäbe über Verbindungsstücke miteinander verbunden, wobei zentral in einen Kopfbereich eines Vollmaterial-Profilstabs eine Halteschraube mit einem konisch eingekerbten Kopf eingeschraubt wird. Der Kopf ragt axial über den Profilstab hervor und wird in eine ebenfalls zentral und axial in den Eckverbinder eingebrachte Bohrung eingesetzt. Quer zu dieser Bohrung wird in das Verbindungsstück ein Gewindestift mit konischer Spitze eingeschraubt, die in den Konus der Halteschraube eingreift und die so angeordnet ist, dass über den Konus die Halteschraube und damit der Profilstab auf eine Stirnfläche des Eckverbinders zugezogen wird, um Eckverbinder und Profilstab miteinander zu verbinden. Diese Anordnung ist aufgrund der Notwendigkeit, zentral in den Profilstab die Halteschraube mit dem konischen Ansatz einzuschrauben, jedoch nur für Vollmaterial-Profilstäbe geeignet und nicht zur Verbindung von Rohrstücken.

Es ist eine Aufgabe der vorliegenden Erfindung, eine im hygienisch sensiblen Bereich einsetzbare Verbindungsanordnung für Profilelemente, von denen mindestens eines ein Rohrstück ist, zu schaffen, mit der die Profilelemente flexibel und belastbar verbunden werden können.

Diese Anordnung wird durch eine Verbindungsanordnung mit den Merkmalen von Anspruch 1 gelöst. Vorteilhafte Ausgestaltungen und Weiterbildungen sind Gegenstand der abhängigen Ansprüche.

Eine erfindungsgemäße Verbindungsanordnung für Profilelemente der eingangs genannten Art zeichnet sich dadurch aus, dass in das Rohrstück ein Gewindeeinsatz eingesetzt ist, an dem ein in Richtung einer Längsachse des Rohrstücks zentral aus dem Rohrstück herausragender Zugbolzen befestigt ist, und dass ein zweites der Profilelemente ein Gegenlager aufweist, wobei der Zugbolzen derart in das Gegenlager eingreift, dass die beiden Profilelemente in Längsrichtung gegeneinander verspannt sind.

Die erfindungsgemäße Verbindungsanordnung beruht somit darauf, dass in dem Rohrstück mittels eines Gewindeeinsatzes ein axialer Zugbolzen angeordnet ist, und dass in dem zweiten Profilelement ein Gegenlager ausgebildet ist, wodurch eine somit im Inneren der Profilelemente liegende Verbindung von Zugbolzen und Gegenlager erfolgen kann. Die Möglichkeit, den Zugbolzen zentral und axial in dem ersten Rohrstück anzubringen, wird durch den Gewindeeinsatz geschaffen. Dazu kann der Zugbolzen selbst mit einem Gewinde versehen sein, das in den Gewindeeinsatz eingreift, oder es kann eine axial durch den Zugbolzen führende Schraube verwendet werden.

Neben einer Nahtstelle, an der die beiden Profilelemente axial aneinander anliegen, manifestiert sich von außen die Verbindungsanordnung lediglich in einer Zugangsöffnung für Komponenten, die dem Verspannen des Zugbolzens dienen. Diese Zugangsöffnung kann jedoch auf einfache Weise abgedeckt werden, z.B. mit einer Rundkappenschraube oder einer Hutmutter mit Dichtung, um allen hygienischen Anforderungen zu entsprechen. Die genannte Nahtstelle zwischen beiden Rohrstücken kann in einer vorteilhaften Ausgestaltung der Verbindungsanordnung durch eine zwischen den Stirnflächen der Rohrstücke eingesetzte Rohrdichtung so abgedichtet sein, dass Spalte vermieden werden und ein Eindringen von z. B. Flüssigkeiten in das Rohrstück bzw. das zweite Profilelement verhindert ist.

Das zweite Profilelement kann dabei ein weiteres Rohrstück sein, oder auch Teil eines Verbinders sein, z.B. eines Eck- oder Mehrfachverbinders. Ein solcher Verbinder kann mehrere axial oder gewinkelt zueinander ausgerichtete Profilelemente aufweisen, die jeweils mit einem ersten Rohrstück über dessen Zugbolzen gekoppelt werden. So entsteht aus Rohren und Verbindern, die sich ggf. in ihrer Geometrie und der Zahl der Verbindungen zu den Rohrstücken unterscheiden können, ein flexibles Verbindungssystem.

In einer vorteilhaften Ausgestaltung der Verbindungsanordnung weist der Gewindeeinsatz eine zentrale Gewindehülse auf, von der mindestens ein Federblatt geneigt absteht. Bevorzugt sind mehrere der Federblätter in mindestens zwei Ebenen an der Gewindehülse angeordnet, wobei zumindest einige der Federblätter Aussparungen aufweisen können, um mindestens ein Kabel durchführen zu können. Der Gewindeeinsatz mit den Federblättern ist ideal geeignet, um Zugkräfte des Zugbolzens aufnehmen zu können. Er kann zudem einfach in ein vor Ort abgelängtes Rohrstück eingesetzt werden, wobei eine Eindrück- oder Einschlaghilfe verwendet werden kann, die ein möglichst zentriertes Einsetzen in der benötigten Tiefe erlaubt.

In einer dazu alternativen Ausgestaltung kann der Gewindeeinsatz eine zentrale Gewindehülse aufweisen und vier radial nach außen abstehende Spreizkeile, die von dem Zugbolzen und dem Gewindeeinsatz durch schräge Kontaktflächen nach außen gedrückt werden, wenn der Zugbolzen und die Gewindehülse durch eine axial verlaufende Spannschraube aufeinander zu gespannt werden. Die Spannschraube befestigt so den Zugbolzen an der Gewindehülse und verspannt den Gewindeeinsatz durch Ausfahren der Spreizkeile im Rohrstück. Die Spreizkeile liegen dabei an den vier Innenkanten des Rohrprofils an, falls dieses ein Vierkantprofil ist.

In einer weiteren vorteilhaften Ausgestaltung der Verbindungsanordnung weist das zweite Profilelement einen Stutzen in einem Endabschnitt auf, auf den das Rohrstück aufgesteckt ist. So wird eine genau fluchtende und stabile Verbindung zwischen den Profilelementen erreicht. Der Stutzen kann auch ein separates Bauteil sein, das mit einem Einsteckabschnitt in das zweite Profilelement eingeschoben wird. Zur Abdichtung kann in beiden Fällen zwischen den Profilelementen eine Rohrdichtung angeordnet sein.

In einer Ausgestaltung der Verbindungsanordnung weist das Gegenlager eine Bohrung auf, in die der Zugbolzen eingeführt ist, wobei der Zugbolzen durch einen in eine Gewindebohrung eingeschraubten Gewindestift festgelegt ist. Die Gewindebohrung und damit der Gewindestift sind von außen zugänglich, so dass nach dem Einstecken des Zugbolzens in die Bohrung des Gegenlagers die Verbindung der Profilelemente etabliert werden kann. Bevorzugt weist der Gewindestift eine Kegelspitze auf, die in eine seitliche Kegelbohrung des Zugbolzens eingreift. So wird beim Festschrauben des Gewindestifts ein Zug auf den Zugbolzen ausgeübt, der die Profilelemente gegeneinander verspannt.

In einer weiteren Ausgestaltung der Verbindungsanordnung weist das Gegenlager einen T-förmigen Schlitz auf, in den ein Kopf des Zugbolzens eingeführt ist, wobei der Kopf des Zugbolzens eine Kegelradverzahnung aufweist und wobei in dem Gegenlager von einer Gewindebohrung ausgehend ein Werkzeugschacht ausgebildet ist, um mit einem Werkzeug in die Kegelradverzahnung einzugreifen und den Zugbolzen drehen zu können. Bei dieser Ausgestaltung kann ein Werkzeug, z.B. ein Vielzahn-Schraubendreher, in den Werkzeugschacht eingeführt werden, um den Zugbolzen zu drehen, der sich dadurch in den Gewindeeinsatz des Rohrstücks einschraubt und die Profilelemente gegeneinander verspannt.

Bei beiden genannten Ausgestaltungen ist im Gegenlager die genannte Gewindebohrung ausgebildet, in die vorteilhaft eine Rundkappenschraube mit untergelegtem Dichtungsring eingeschraubt ist, um die Gewindebohrung nach außen hin abzudichten.

Das Gegenlager kann in den genannten Fällen durch Bohrungen und/oder Fräsungen aus einem Vollmaterial des zweiten Profilelements herausgearbeitet sein. Alternativ kann als zweites Profilelement aber auch ein weiteres Rohrstück eingesetzt werden, indem ein Querbolzen als Gegenlager verwendet werden, der quer zu einer Längsachse des zweiten Profilelements in mindestens eine Bohrung eingesetzt ist. Die Bohrung kann dabei ein Sackloch sein.

In einer weiteren Ausgestaltung der Verbindungsanordnung, die sich eines Querbolzens als Gegenlager bedient, kann der Zugbolzen einen Kopf mit einer Querbohrung aufweisen und der Querbolzen in einem mittleren Bereich einen exzentrischen Nocken, der in der Querbohrung positioniert ist. Bei dieser Ausführungsform wird ein Verspannen der Profilelemente gegeneinander durch Verdrehung des Querbolzen erreicht.

Zur Abdichtung und zum Kontern des Querbolzens kann dieser mit einem Außengewindeabschnitt versehen sein, auf den eine Hutmutter mit untergelegtem Dichtungsring aufgeschraubt ist.

Die Erfindung wird nachfolgend anhand von Ausführungsbeispielen mit Hilfe von Figuren näher erläutert. Die Figuren zeigen:
- Fig. 1a-c: ein Ausführungsbeispiel einer Verbindungsanordnung für zwei Rohrstücke in verschiedenen Ansichten;
- Fig. 2a-c: ein weiteres Ausführungsbeispiel einer Verbindungsanordnung für Profilelemente in verschiedenen Ansichten;
- Fig. 3: verschiedene Teilbilder a) bis f) mit jeweils einer isometrischen Ansicht einer Verbindungsanordnung;
- Fig. 4a, b: ein weiteres Ausführungsbeispiel einer Verbindungsanordnung für Profilelemente in verschiedenen Ansichten;
- Fig. 5: isometrische Detailansichten von zwei verschieden ausgestalteten Gewindeeinsätzen einer Verbindungsanordnung;
- Fig. 6a, b: ein weiteres Ausführungsbeispiel einer Verbindungsanordnung für zwei Rohrstücke in verschiedenen Ansichten;
- Fig. 7a-c: schematische Darstellungen eines Montagevorgangs der Verbindungsanordnung der Fig. 6a, b;
- Fig. 8a-c: ein weiteres Ausführungsbeispiel einer Verbindungsanordnung für zwei Rohrstücke in verschiedenen Ansichten; und
- Fig. 9a,-d: ein weiteres Ausführungsbeispiel einer Verbindungsanordnung für Profilelemente in verschiedenen Ansichten.

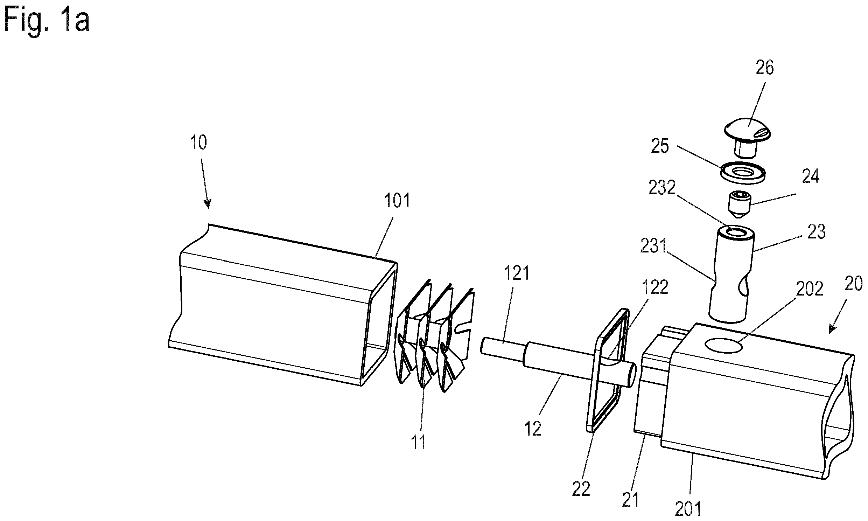

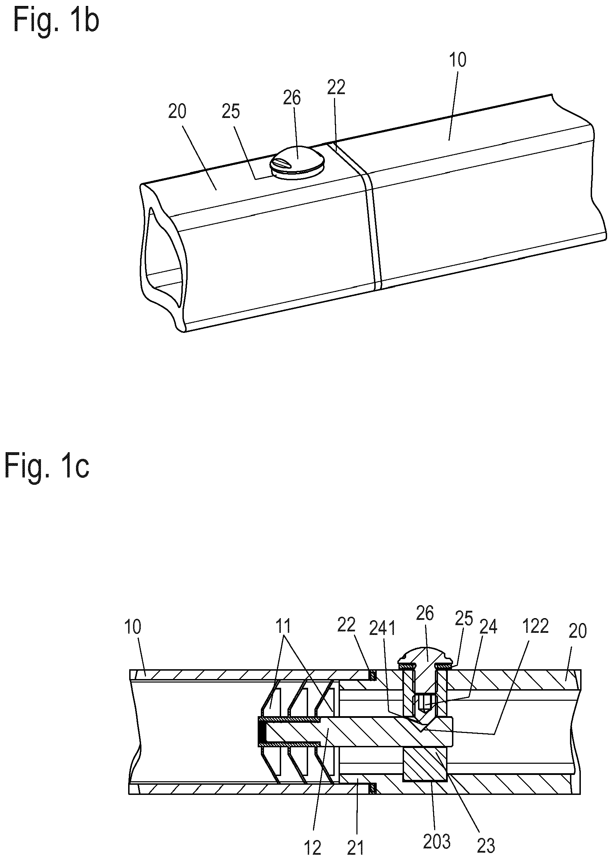

In Fig. 1a ist ein erstes Ausführungsbeispiel einer Verbindungsanordnung zweier Profilelemente, in diesem Fall zweier Rohrstücke 10, 20, in einer isometrischen Explosionszeichnung dargestellt. Die erfolgte Verbindung der beiden Rohrstücke 10, 20 ist ein einer isometrischen Darstellung in Fig. 1b und in einer Schnittdarstellung in Fig. 1c wiedergegeben. Der Schnitt in Fig. 1c ist entlang einer Mittelebene ausgeführt, die sich in Längsrichtung der Rohrstücke 10, 20 erstreckt.

Die beiden zu verbindenden Rohrstücke 10, 20 sind in diesem wie in allen weiteren gezeigten Ausführungsbespielen Rohre mit einem quadratischen Querschnitt. Ein derartiger eckiger, nicht runder Querschnitt ist im hygienisch sensiblen Anwendungsbereich vorteilhaft. Horizontal verlaufende Rohre werden dabei so angeordnet, dass sie mit einer Längskante nach oben ausgerichtet sind, so dass die Anordnung keine horizontalen ebenen Flächen aufweist, auf denen sich Flüssigkeiten absetzen könnten, die nicht abtropfen. Es versteht sich, dass das anmeldungsgemäße Grundprinzip der Verbindungsanordnung für Rohrstücke auch mit Rohren mit anderem Querschnitt umgesetzt werden kann. Als Material der Rohre wird bevorzugt Metall und im hygienisch sensiblen Bereich insbesondere Edelstahl eingesetzt.

Zur Verbindung der beiden Rohrstücke 10, 20 wird in eines der Rohrstücke 10 in dessen Endabschnitt 101 ein Gewindeeinsatz 11 eingesetzt, in den ein Zugbolzen 12 eingeschraubt wird. Als Gewindeeinsatz 11 wird vorteilhaft eine auch als Klemmmutter bezeichnete Anordnung aus einer Gewindehülse 111 mit seitlich von dieser abstehenden Federblättern 112 verwendet.

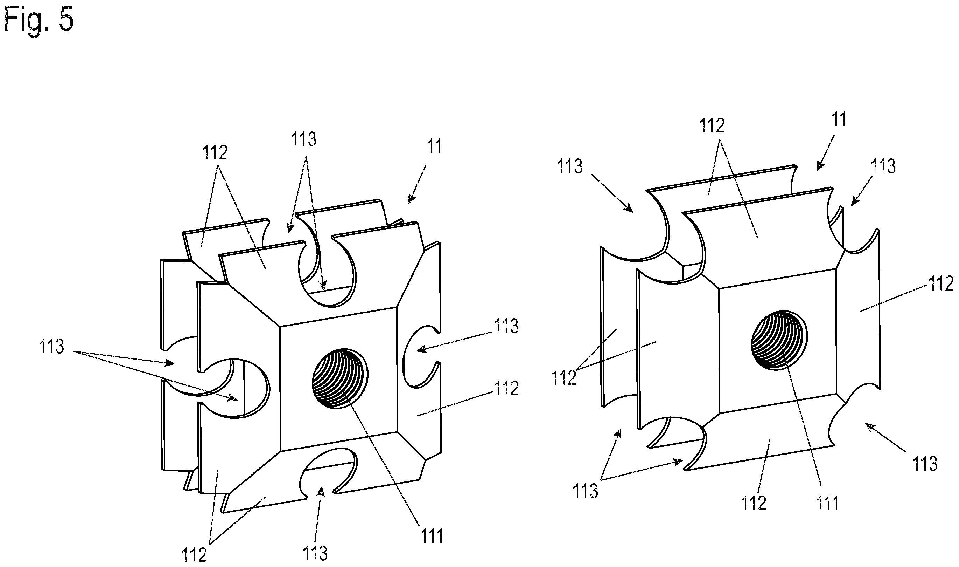

Detaillierter sind zwei verschiedene Ausführungsbeispiele eines derartigen Gewindeeinsatzes 11 in Fig. 5 in einer isometrischen Darstellung gezeigt. Die Federblätter 112 umgeben die Gewindehülse 111 in mindestens zwei (vgl. Fig. 5) oder auch mehr (vgl. Fig. 1a) parallel zueinander angeordneten Ebenen. Innerhalb einer Ebene sind jeweils vier einzelne Federblätter 112 schräg angeordnet, die wie Widerhaken wirken, wenn der Gewindeeinsatz 11 in den Endabschnitt 101 des Rohrstücks 10 eingeschoben wird.

Die Gewindehülse 111, an der die Federblätter 112 befestigt sind, weist ein Innengewinde auf, in das der Zugbolzen 12 mit einem Außengewinde 121 eingeschraubt wird. Zum Einsetzen des Gewindeeinsatzes 11 in das Rohrstück 10 kann ein Eindrück- oder Einschlagwerkzeug verwendet werden, das eine möglichst axiale Ausrichtung der Gewindehülse 111 und bevorzugt eine möglichst definierte Einsetztiefe bewirkt. Nach erfolgtem Einsetzen des Gewindeeinsatzes 11 und Einschrauben des Zugbolzens 12 steht dieser mit einem vorderen freien Ende über den Endabschnitt 101 des Rohrstücks 10 hinaus und ist möglichst axial und zentral zum Rohrstück 10 ausgerichtet.

Am weiteren Rohrstück 20 ist an dessen Endabschnitt 201 ein Stutzen 21 ausgebildet, der bevorzugt spielfrei oder mit geringem, definiertem Spiel in das erste Rohrstück 10 eingeschoben werden kann. Der Stutzen 21 kann der hervorstehende Teil eines Einsatzes sein, der in das weitere Rohrstück 20 eingeschoben ist und dort nach Möglichkeit stoffschlüssig mit dem weiteren Rohrstück verbunden ist, z.B. durch eine Verschweißung. Alternativ kann, wie im vorliegenden Beispiel anhand der Fig. 1c ersichtlich, das weitere Rohrstück 20 bei gleichen Außenabmessungen eine größere Wandstärke als erste Rohrstück 10 aufweisen, so dass der Stutzen 21 durch Abfräsen des weiteren Rohrstücks 20 im Endabschnitt 201 gebildet sein kann.

Die Rohrstücke 10, 20 können somit ineinander gesteckt werden, wobei der Stutzen 21 in das Rohrstück 10 ragt. Die Rohrstücke 10, 20 liegen dann mit ihren Endabschnitten 101, 201 stirnseitig gegeneinander, wobei eine Rohrdichtung 22 zwischengelegt ist, die die Nahtstelle zwischen beiden Rohrstücken 10, 20 abdichtet. Die Rohrdichtung 22 ist bevorzugt eine Kompositdichtung, die einen inneren Metallring mit einem äußeren elastischen Abschnitt vereint. Der innere Metallring stellt sicher, dass auch bei großen, die Rohrstücke 10, 20 aufeinander zu ziehenden Kräften beide Rohrstücke 10, 20 eine definierte Position zueinander einnehmen, ohne dass die Rohrdichtung 22 bzw. deren elastischer äußerer Abschnitt zerstört wird.

In das weitere Rohrstück 20 ist beabstandet vom Endabschnitt 201 eine Bohrung 202 eingebracht, in die ein Querbolzen 23 eingesteckt wird. Diese Bohrung wird nachfolgend auch als Querbohrung 202 bezeichnet. Wie in der Querschnittszeichnung der Fig. 1c ersichtlich ist, ist in der gegenüberliegenden Wandung des weiteren Rohrstück 20 eine vergleichbare Bohrung 203 als Sackloch ausgebildet (nachfolgend auch als Sackloch 203 bezeichnet). Mit einem unteren Ende sitzt der Querbolzen 23 möglichst passgenau in dem Sackloch 203.

Der Querbolzen 23 weist quer zu seiner Längsrichtung im mittleren Bereich eine Durchgangsbohrung 231 auf, in die beim Zusammenstecken der beiden Rohrstücke 10, 20 der Zugbolzen 12 des Rohrstücks 10 eindringt. Der Querbolzen 23 dient somit in diesem Ausführungsbeispiel als Gegenlager für den Zugbolzen 12. In Längsrichtung ist der Querbolzen 23 zumindest in seinem oberen, sich bis zu der Durchgangsbohrung 231 erstreckenden Abschnitt mit einer Gewindebohrung 232 versehen, in die ein Gewindestift 24 eingeschraubt wird. In dem Bereich des Zugbolzens 12, der im Querbolzen 23 positioniert ist, ist eine Kegelbohrung 122 in dem Zugbolzen 12 angeordnet. In diese Kegelbohrung 122 greift der Gewindestift 24 mit einer an ihrem vorderen Ende ausgebildeten Kegelspitze 241 ein.

Wie gut in Fig. 1c ersichtlich ist, trifft der Gewindestift 24 die Kegelbohrung 122 an ihrer dem freien Ende des Zugbolzens 12 zugewandten Seite. Beim Einschrauben des Gewindestifts 24 wird dadurch eine Kraft auf den Zugbolzen 12 ausgeübt, die den Bolzen am Querbolzen 23 befestigt und eine Zugkraft auf den Zugbolzen 12 ausübt, die wiederum das Rohrstück 10 und das weitere Rohrstück 20 aufeinander zu zieht. Durch die auf den Zugbolzen 12 ausgeübte Zugkraft entsteht eine feste, spielfreie und belastbare Verbindung zwischen den beiden Rohrstücken 10, 20.

Nachdem die Verbindung durch Anziehen des Gewindestifts 24 gefestigt ist, wird in die Gewindebohrung 232 des Querbolzens 23 eine Rundkappenschraube 26 mit einem aufgelegten Dichtungsring 25 eingeschraubt. Der Dichtungsring 25 und die Rundkappenschraube 26 überdecken dabei in ihrem Durchmesser die Querbohrung 202 und dichten diesen Bereich gegenüber von außen eintretenden Flüssigkeiten oder ähnlichem ab.

Die Länge des Gewindestifts 24 und der Rundkappenschraube 26 können so aufeinander abgestimmt sein, dass die Rundkappenschraube 26 bei geeignet komprimiertem Dichtungsring 25 den Gewindestift 24 kontert. Alternativ ist auch denkbar, dass an der Unterseite der Kappe der Rundkappenschraube 26 ein Absatz ausgebildet ist, der die Einschraubtiefe der Rundkappenschraube 26 festlegt, so dass der um den Absatz herum gelegte Dichtungsring 25 nicht durch das Anziehen der Rundkappenschraube 26 zerstört wird. Weiter alternativ kann der Dichtungsring 25 eine Kompositdichtung mit einem inneren festen und einem äußeren elastischen Bereich sein, so dass ein Festziehen der Rundkappenschraube 26 auch ohne Anschlag in der Gewindebohrung 232 oder ohne Absatz an der Kappe der Rundkappenschraube 26 möglich ist, ohne den Dichtungsring 25 zu beeinträchtigen.

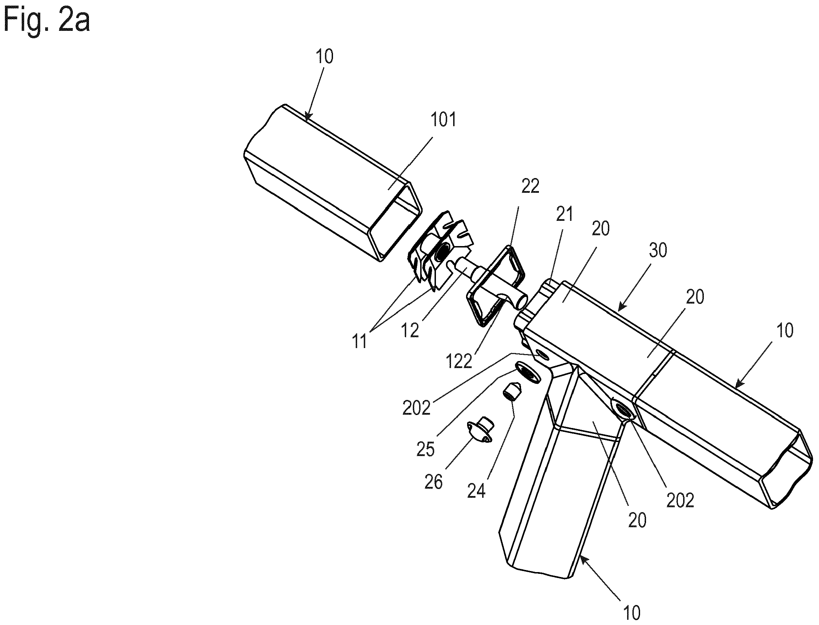

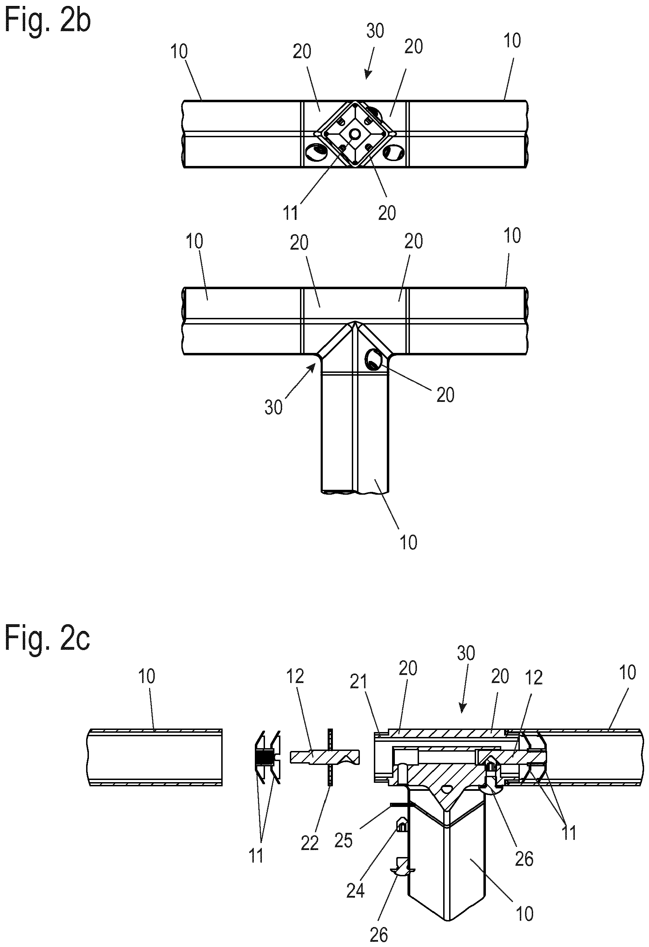

In den Fig. 2a-2c ist ein weiteres Ausführungsbeispiel einer Verbindungsanordnung für Profilelemente dargestellt. Fig. 2a zeigt wiederum eine isometrische Darstellung, die teilweise als Explosionszeichnung ausgeführt ist. In Fig. 2b sind zwei verschiedene Seitenansichten auf die zusammengesetzte Verbindungsanordnung wiedergegeben. Fig. 2c zeigt eine Schnittdarstellung der Verbindungsanordnung in dem teilweise zusammengesetzten Zustand, der auch in Fig. 2a zu sehen ist.

Das Grundprinzip der Verbindungsanordnung der Fig. 2a-2c entspricht dem der Fig. 1a-1c. Bei der in den Fig. 2a-2c gezeigten Verbindung ist ein Verbinder 30 eingesetzt, an dem drei weitere Rohrprofile 20' in einer T-Form anmontiert sind. Die Rohrprofile 20' entsprechen in ihrer Funktion dem Rohrstück 20 der vorherigen Figuren. Sie stellen jeweils ein Gegenlager für den Zugbolzen 12 des Rohrstücks 10 bereit. Auf jedes dieser weiteren Rohrprofile 20' ist ein entsprechend mit Gewindeeinsatz 11 und Zugbolzen 12 ausgestattetes Rohrstück 10 aufgesteckt. Jede Verbindungsanordnung der drei Paare von Rohrstück 10 und Rohrprofil 20' ist analog zum ersten Ausführungsbeispiel der Figuren 1a-1c ausgeführt.

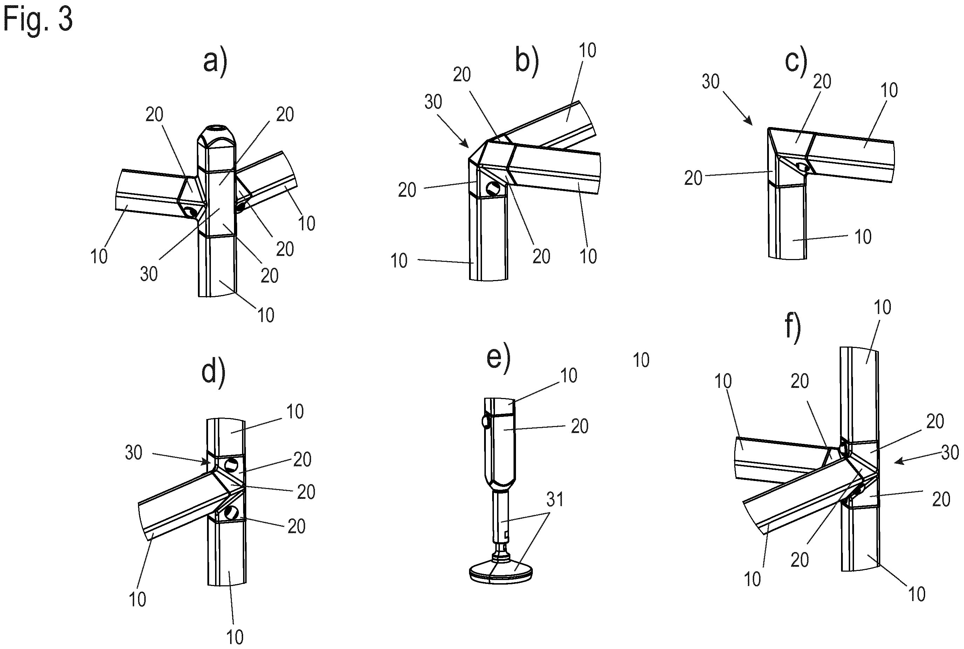

Fig. 3 zeigt in verschiedenen Teilbildern a) bis f) weitere Verbindungsanordnungen der in den Fig. 2a-2c gezeigten Art. Der in den Fig. 2a-2c gezeigte Verbinder 30 in konkret in Fig. 3 im Teilbild d) wiedergegeben. Eine weitere Ausgestaltung eines Verbinders 30, in den drei Rohrstücke 10 eingesteckt werden können, zeigt das Teilbild b) der Fig. 3.

In den Teilbildern a) und f) sind Verbinder 30 gezeigt, die zur Verbindung mit vier Rohrstücken 10 ausgebildet sind und entsprechend vier weitere Rohrprofile 20' aufweisen. Teilbild c) zeigt einen als Eckverbinder ausgebildeten Verbinder 30, der mit zwei Rohrstücken 10 verbunden werden kann. Im Teilbild e) schließlich ist ein Verbinder 30 gezeigt, der mit einem einzigen Rohrstück 10 gekoppelt werden kann, wobei das entsprechend einzige Rohrprofil 20' in einen Standfuß 31 übergeht.

Es versteht sich, dass die gezeigten Verbinder 30 im Hinblick auf die mögliche Anzahl, Geometrie, Ausrichtung und Länge der Rohrprofile 20', die die Verbinder 30 aufweisen, rein beispielhaft sind und nicht darauf beschränkt sind. Weiter versteht sich, dass auch Verbinder denkbar sind, die Rohrstücke 10 mit Zugbolzen 12 aufweisen, und die dann mit einem oder mehreren weiteren Rohrstücken 20 verbindbar sind.

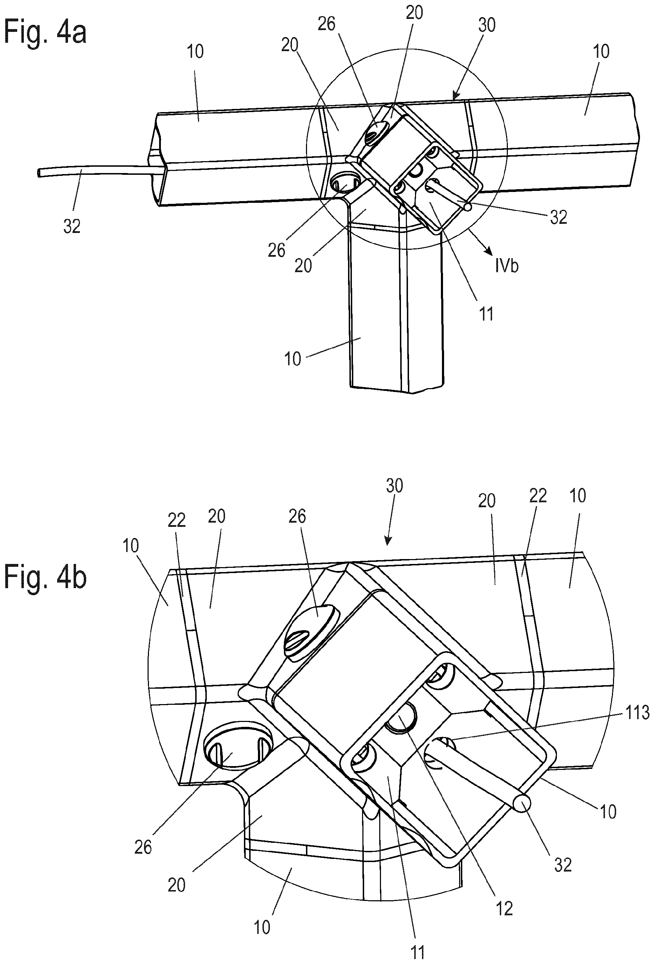

In Fig. 4a ist der Verbinder 30 gemäß Fig. 3, Teilbild f) nochmals vergrößert dargestellt. Dabei ist gezeigt, dass vorteilhaft bei entsprechender Ausgestaltung der verwendeten Gewindeeinsätze 11 auch die Durchführung eines Kabels 32 von einem der Rohrstücke 10 in ein weiteres der Rohrstücke 10 möglich ist. Dazu sind die Gewindeeinsätze 11 bzw. mindestens eines der Federblätter 112 mit zumindest einer Aussparung 113 versehen, durch die das Kabel 32 geführt werden kann. Weiter ist der Verbinder 30 ebenfalls so gestaltet, dass das Kabel 32 von einem der Rohrprofile 20' in ein weiteres der Rohrprofile 20' geführt werden kann. Mögliche Anordnungen der Aussparungen 113 sind bei den beiden in Fig. 5 gezeigten Gewindeeinsätzen 11 wiedergegeben.

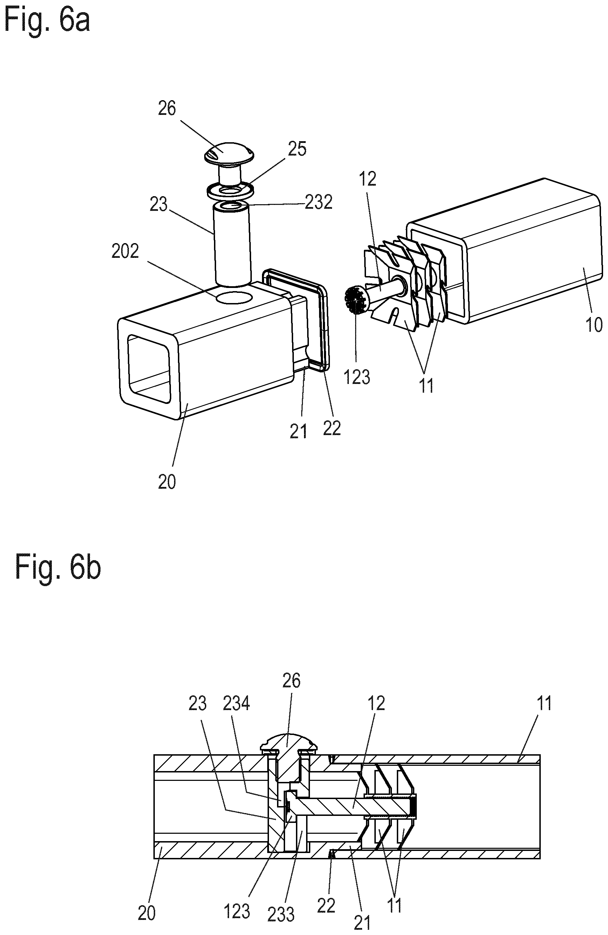

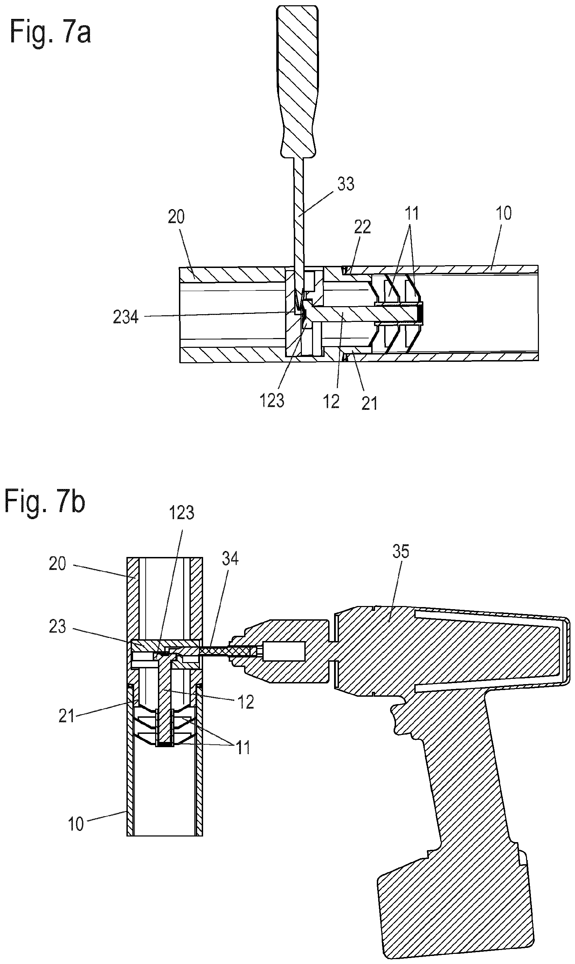

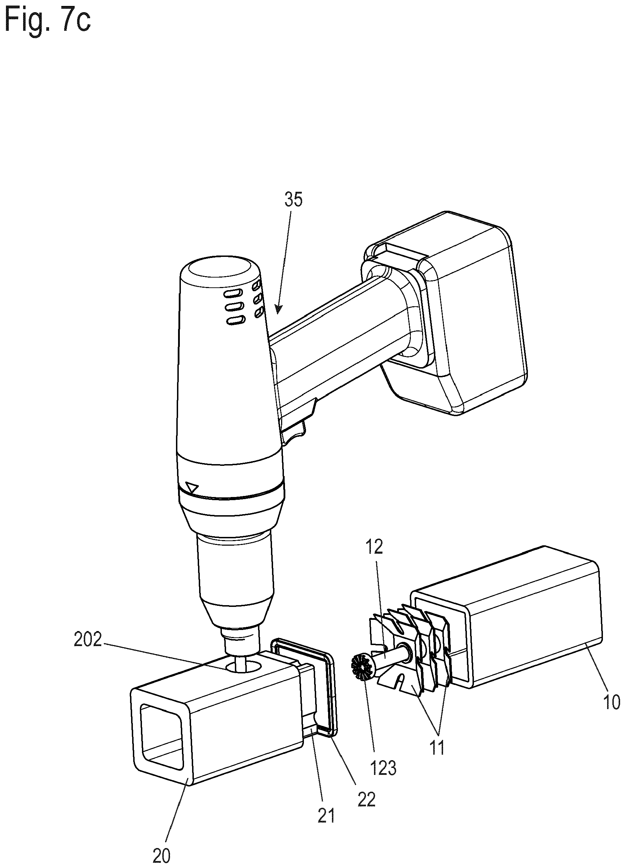

In den Fig. 6a-7c ist ein weiteres Ausführungsbeispiel einer Verbindungsanordnung für zwei Rohrstücke 10, 20 gezeigt. In der Fig. 6a ist die Verbindungsanordnung in einer isometrischen Explosionsdarstellung wiedergegeben. Die Fig. 6b zeigt eine Schnittdarstellung in Richtung einer Längsachse der Rohrstücke 10, 20. In den Fig. 7a-c ist ein Zusammensetzen der Verbindungsanordnung auf zwei verschiedene Arten verdeutlicht. Fig. 7a ist eine isometrische Darstellung und die Fig. 7b und 7c sind jeweils Schnittdarstellungen.

In den genannten Figuren kennzeichnenden gleiche Bezugszeichen gleiche oder gleichwirkende Elemente wie bei den Figuren der vorherigen Ausführungsbeispiele.

Vom Grundaufbau entspricht die Verbindungsanordnung der Fig. 6a-7c den zuvor gezeigten. Beispielhaft sind zwei abgeschnitten dargestellte Rohrstücke 10, 20, die verbunden werden, eingesetzt. Es versteht sich, dass die in den Fig. 6a-7c gezeigte Verbindungsanordnung auch im Zusammenhang mit Verbindern 30, wie sie z.B. in Fig. 3 dargestellt sind, eingesetzt werden kann.

Wie bei den zuvor beschriebenen Ausführungsbeispielen ist in das erste Rohrstück 10 ein Gewindeeinsatz 11 mit einem Zugbolzen 12 eingesetzt. Der Zugbolzen 12 weist in diesem Ausführungsbeispiel einen Kopf mit einer Kegelverzahnung 123 auf.

In das weitere Rohrstück 20 ist wiederum eine Querbohrung 202 und in die gegenüberliegende Wandung ein Sackloch 203 eingebracht, in die ein Querbolzen 23 eingesetzt wird. Im oberen, in der Querbohrung 202 liegenden Bereich ist eine Gewindebohrung 232 in dem Querbolzen 23 angeordnet, in den nach erfolgter Montage wie gehabt eine Rundkappenschraube 26 mit untergelegtem Dichtungsring 25 eingeschraubt werden kann, um die Querbohrung 202 abzudichten.

Anders als beim Querbolzen 23 der zuvor gezeigten Ausführungsbeispiele ist vorliegend von der der Gewindebohrung 232 gegenüberliegenden Seite des Querbolzens 23 aus ein T-förmiger Schlitz 233 in den Querbolzen 23 eingebracht. In den Schlitz 233 wird der Kopf mit der Kegelverzahnung 123 des Zugbolzens 12 eingeschoben. Die Lage des Kopfs des Zugbolzens 12 im Querbolzen 23 ist gut in der Schnittdarstellung der Fig. 6b zu erkennen. Von der Gewindebohrung 232 aus ist ein Werkzeugschacht 234 in dem Querbolzen 23 weitergeführt, der in seiner Tiefe bis zur Achse des Zugbolzens 12 ragt.

Nach dem Zusammensetzen der Rohrstücke 10, 20 und dem Einsetzen des Querbolzens 23 kann in den Werkzeugschacht 234 ein Werkzeug eingeführt werden, das in die Kegelverzahnung 123 des Zugbolzens 12 eingreift und mit dem der Zugbolzen 12 gedreht werden kann, um ihn mit seinem Außengewinde 121 in die Gewindehülse 111 des Gewindeeinsatzes 11 einzuschrauben und damit die beiden Rohrstücke 10, 20 zueinander zu verspannen.

Fig. 7a zeigt in einer Schnittdarstellung die Verbindungsanordnung mit einem eingesetzten Handwerkzeug 33. Bei entsprechender Ausgestaltung der Kegelverzahnung 123 kann beispielsweise ein Vielzahnschraubendreher als Handwerkzeug 33 eingesetzt werden.

Wie in den Fig. 7b und 7c dargestellt ist, kann alternativ zum Handwerkzeug 33 auch ein Werkzeug 34, das in einen Akkuschrauber 35 eingesetzt ist, zum Festziehen bzw. auch zum Lösen der Verbindung der beiden Rohrstücke 10 eingesetzt werden.

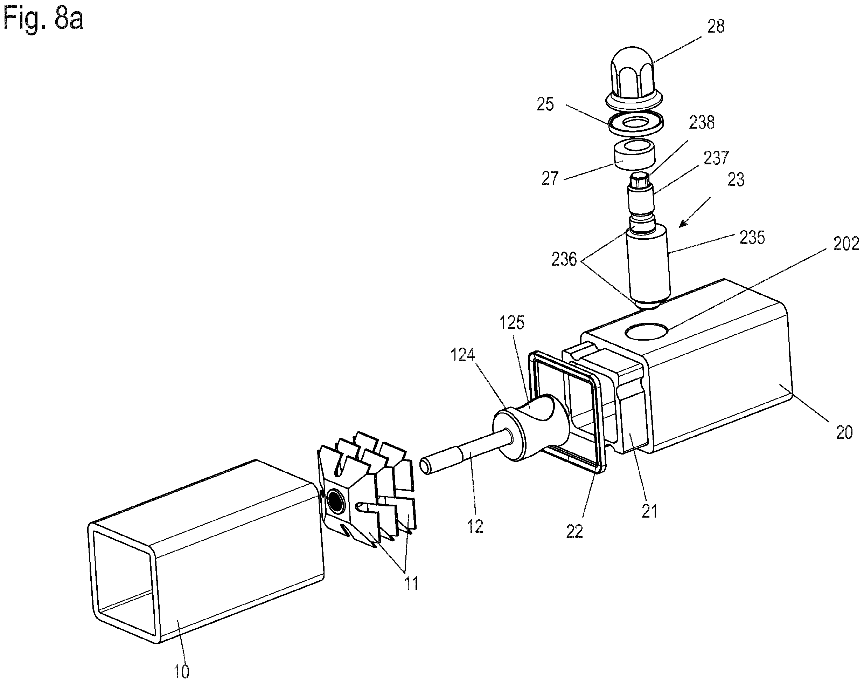

Die Fig. 8a-c zeigen ein weiteres Ausführungsbeispiel einer anmeldungsgemäßen Verbindungsanordnung. Wiederum kennzeichnen gleiche Bezugszeichen gleiche oder gleichwirkende Elemente wie bei den vorherigen Ausführungsbeispielen. Vom Grundaufbau entspricht auch diese Verbindungsanordnung den zuvor gezeigten, auf die hiermit explizit verwiesen wird. Nachfolgend werden im Wesentlichen Unterschiede zu den vorherigen Ausführungsbeispielen erläutert.

Auch bei diesem Ausführungsbeispiel versteht es sich, dass die Verbindungsanordnung nicht nur mit zwei losen Rohrstücken 10, 20 wie dargestellt ausgeführt sein kann, sondern auch mit Rohrstücken 10 oder Rohrprofilen 20', die Teil von Verbindern 30 (vgl. z.B. Fig. 3) sind.

Bei dem in den Fig. 8a-c wiedergegebenen Ausführungsbeispiel weist der in den Gewindeeinsatz 11 eingeschraubte Zugbolzen 12 einen großen zylinderförmigen Kopf 124 mit einer Querbohrung 125 auf.

In das weitere Rohrstück 20 ist wiederum in eine Querbohrung 202 und ein gegenüber liegendes Sackloch 203 ein Querbolzen 23 eingesetzt, der in einem mittleren Bereich einen exzentrischen Nocken 235 aufweist. In dem Sackloch 203 sitzt der Querbolzen mit einem Zapfen, gegenüber dem der Nocken 235 exzentrisch ist. Das Sackloch 203 ist anders als in zuvor beschriebenen Ausführungsbeispielen nicht konzentrisch zu der Querbohrung 202 angeordnet. Um den Querbolzen 23 trotz des exzentrischen Nockens 235 in die Querbohrung 202 einsetzen zu können, ist die Querbohrung 202 größer ausgebildet, als ein nicht-exzentrischer Abschnitt 236 des Querbolzens 23, der fluchtend mit dem genannten Zapfen ist. Um den Querbolzen 23 in diesem nichtexzentrischen Abschnitt 236 führen zu können, wird nach dem Einsetzen des Querbolzens 23 ein Exzenterring 27 in die Querbohrung 202 eingesetzt.

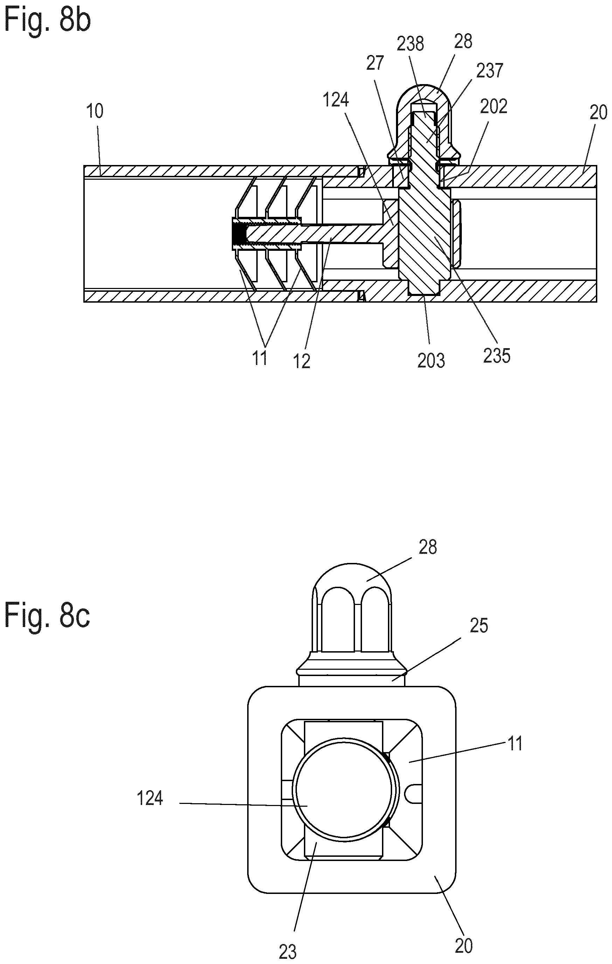

Wie Fig. 8b zeigt, wird im zusammengesetzten Zustand der Rohrstücke 10, 20 der Querbolzen 23 durch die Querbohrung 125 des Zugbolzens 12 geführt. Ein Verdrehen des Querbolzens 23 führt aufgrund des exzentrischen Nockens 235 zu einem Verspannen des ersten Rohrstücks 10 gegenüber dem weiteren Rohrstück 20. Eine seitliche Bewegung, der der Kopf 124 des Zugbolzens 12 dabei unterworfen ist, kann durch die Federblätter 112 des Gewindeeinsatzes 11 ausgeglichen werden. Dieses ist in der Aufsicht auf die offene Stirnseite des weiteren Rohrstücks 20 gemäß Fig. 8c gut zu erkennen.

Bei eingesetztem Querbolzen 23 steht dieser über die Ebene der Wandung des weiteren Rohrstücks 20 hervor. Der hervorstehende Teil weist einen Außengewindeabschnitt 237 sowie eine Werkzeugaufnahme 238 auf, die beispielsweise als ein Sechskant ausgebildet ist. Mit Hilfe der Werkzeugaufnahme 238 kann eine Verdrehung des Querbolzens 23 und damit ein Verspannen über den exzentrischen Nocken 235 vorgenommen werden. Nach erfolgter Einstellung kann auf den Außengewindeabschnitt 237 eine Hutmutter 28, wiederum mit untergelegtem Dichtungsring 25, aufgeschraubt werden, um die Querbohrung 202 abzudichten und auch den Querbolzen 23 zu kontern und damit an einem Verdrehen zu hindern.

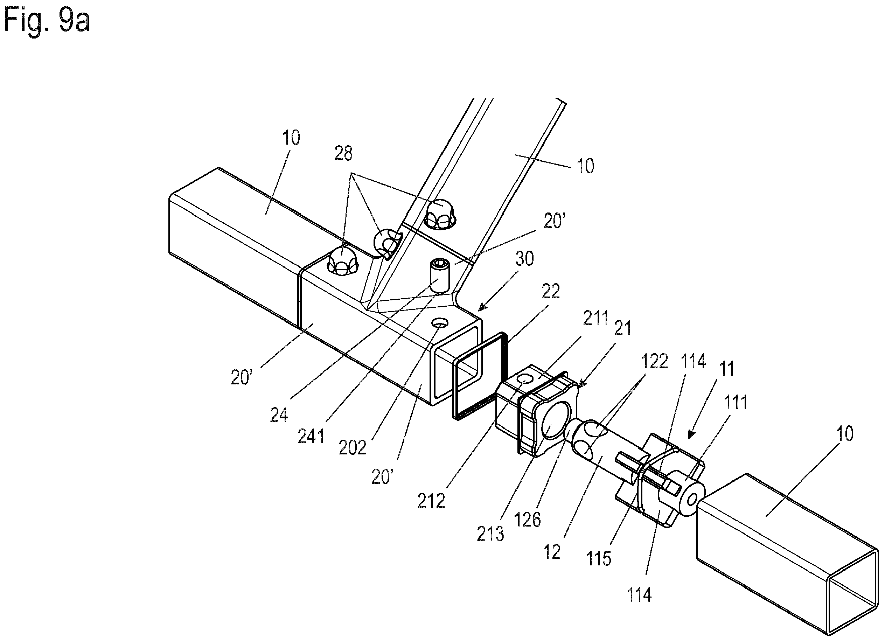

Die Fig. 9a-d zeigen ein weiteres Ausführungsbeispiel einer anmeldungsgemäßen Verbindungsanordnung. Auch hier kennzeichnen gleiche Bezugszeichen gleiche oder gleichwirkende Elemente wie bei den vorherigen Ausführungsbeispielen. Wiederum entspricht dieser Verbindungsanordnung im Grundaufbau den zuvor gezeigten, auf die hiermit explizit verwiesen wird. Unterschiede zu den vorherigen Ausführungsbeispielen werden nachfolgend detaillierter erläutert.

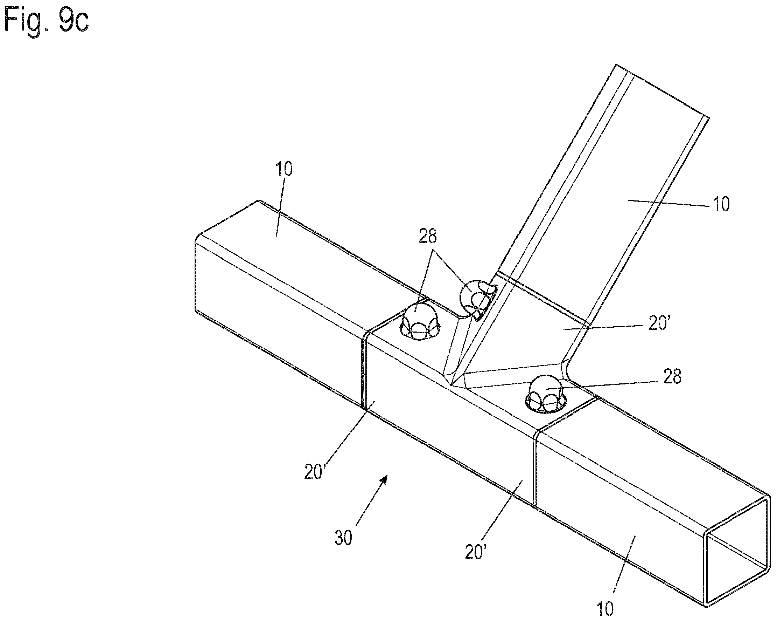

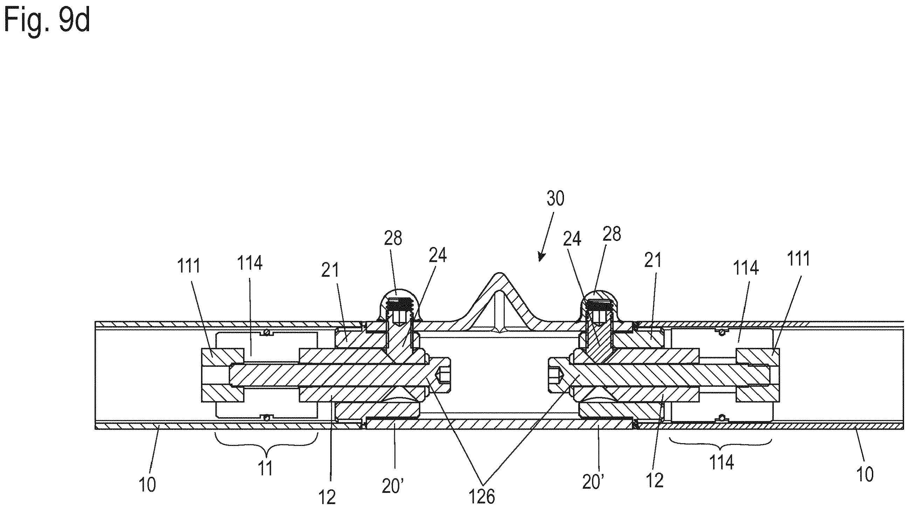

Die Figuren zeigen eine Anordnung aus einem Verbinder 30, der in Art eines T-Verbinders aufgebaut ist und der entsprechend drei Rohrprofile 20' aufweist, an die erste Rohrstücke 10 angesetzt werden können. Zwei erste Rohrstücke 10 sind bereits mit dem Verbinder 30 verbunden, ein weiteres erstes Rohrstück 10 ist in den Fig. 9a-c in verschiedenen Stadien des Verbindens in jeweils einer isometrischen Darstellung wiedergegeben. Die Fig. 9d zeigt ein Schnitt durch den zusammengesetzten Endzustand, der auch in der Fig. 9c wiedergegeben ist.

Bei den bisher vorgestellten Ausführungsbeispielen ist der Stutzen 21 eines weiteren Rohrstücks 20 (oder eines Rohrprofils 20') nicht zwingend einstückig, aber dennoch fest mit dem weiteren Rohrstück 20 (oder dem Rohrprofil 20') verbunden.

Wie die Explosionsdarstellung der Fig. 9a zeigt, ist bei diesem Ausführungsbeispiel der Stutzen 21 ein separates Element, das in die Öffnung des Rohrprofils 20' (oder eines weiteren Rohrstücks 20) eingesteckt wird. Der Stutzen 21 weist zu diesem Zweck einen Einsetzabschnitt 211 auf, mit dem er in die Öffnung des Rohrprofils 20' (oder des weiteren Rohrstücks 20) eingeschoben wird. Wie bei dem vorherigen Ausführungsbeispiel ist im Rohrprofil 20' eine Bohrung 202 angeordnet, in die ein Gewindestift 24 eingeschraubt wird. Der Einsetzabschnitt 211 des Stutzen 21 weist ebenfalls eine Bohrung 212 auf, die im bei eingesetztem Stutzen 21 deckungsgleich mit der Bohrung 202 ist, so dass der Gewindestift 24 an dieser Stelle durch den Einsetzabschnitt 211 geführt ist, wodurch der Stutzen 21 am Rohrprofil 20' befestigt ist.

Ebenfalls wie bei den zuvor gezeigten Ausführungsbeispielen ist im Bereich des Übergangs zwischen dem Rohrprofil 20' und dem aufgesetzten ersten Rohrstück 10 eine Rohrdichtung 22 angeordnet. Im Unterschied zu den vorherigen Ausführungsbeispielen ist die Rohrdichtung 22 bei diesem Ausführungsbeispiel nicht von außen auf den Stutzen 21 aufgeschoben, sondern wird vor dem Einsetzen des Stutzens 21 auf den Einsetzabschnitt 211 aufgelegt. Dazu ist im äußeren Bereich an dem auf dem Rand des Rohrprofils 20' aufliegenden Abschnitt des Stutzens 21 ein Absatz eingearbeitet, der bei eingesetztem Stutzen 21 eine umlaufende Nut zwischen dem Rohrprofil 20' und dem hervor stehenden Teil des Stutzens 21 bildet. In dieser Nut liegt die Rohrdichtung 22. Die Rohrdichtung 22 wird so in dieser Nut gehalten, ohne jedoch zwischen dem Rohrprofil 20' und dem ersten Rohrstück 10 vollständig eingequetscht werden zu können. Die Rohrdichtung 22 benötigt dadurch anders als in den zuvor gezeigten Ausführungsbeispielen keinen festen inneren Metallring, der sicherstellt, dass der elastische Teil der Rohrdichtung 22 nicht zerquetscht wird.

Ein weiterer Unterschied bei diesem Ausführungsbeispiel verglichen mit den vorherigen Ausführungsbeispielen ist, dass der Stutzen 21 stirnseitig eine Öffnung 213 aufweist, die in Form und Größe an die äußere Abmessung des Zugbolzens 12 angepasst ist. Die Öffnung 213 dient damit als Lager für den Zugbolzen 12, ähnlich wie beim Ausführungsbeispiel der Fig. 1a-c die Durchgangsbohrung 231 des Querbolzens 23.

Wie bei den vorherigen Ausführungsbeispielen ist der Zugbolzen 12 mit Hilfe eines Gewindeeinsatzes 11 im ersten Rohrstück 10 montiert. Bei den zuvor gezeigten Ausführungsbeispielen wurde eine Gewindehülse 111 durch Federblätter 112, die sich im ersten Rohrstück 10 verkeilen, befestigt. Bei dem vorliegenden Ausführungsbeispiel sind zwischen dem Zugbolzen 12 und einer Gewindehülse 111 vier Spreizkeile 114 angeordnet, die im rechten Winkel zueinander radial von der Gewindehülse 111 bzw. dem Zugbolzen 12 nach außen abstehen. Im Kontaktbereich der Spreizkeile 114 mit der Gewindehülse 111 bzw. dem Zugbolzen 12 sind die Spreizkeile 114 ebenso wie die Kontaktflächen der Gewindehülse 111 und des Zugbolzens 12 angeschrägt, derart, dass sich die Spreizkeile 114 nach außen bewegen, wenn der Zugbolzen 12 und die Gewindehülse 111 aufeinander zubewegt werden. Im nicht eingesetzten Zustand des Gewindeeinsatzes 11 werden die Spreizkeile 114 durch ein umlaufendes Gummiband 115 in Position gehalten.

Der Gewindeeinsatz 11 wird so in das erste Rohrstück 10 eingeschoben, dass die Spreizkeile 114 jeweils an Innenkanten des ersten Rohrstücks 10 anliegen. Dabei kann eine Lehre verwendet werden, die die korrekte Einsetztiefe des Gewindeeinsatzes 11 sicherstellt. Axial durch den Zugbolzen 12 verläuft eine Schraube 126, die mit ihrem Gewinde in die Gewindehülse 111 eingreift. Durch Anziehen der Schraube 126 wird die Gewindehülse 111 gegenüber dem Zugbolzen 12 verspannt, wodurch sich die Spreizkeile 114 in die Innenkanten des ersten Rohrstücks 10 pressen und somit den Gewindeeinsatz 11 zentriert im ersten Rohrstück 10 befestigen.

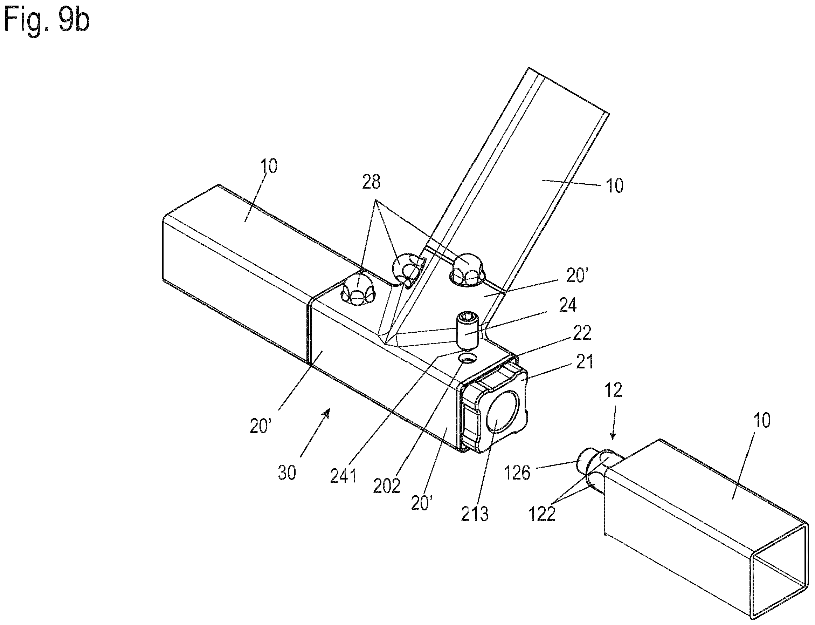

Die Fig. 9b zeigt die Anordnung gemäß Fig. 9a mit in das Rohrprofil 20'eingesetztem Stutzen 21 und mit in das erste Rohrstück 10 eingesetztem Gewindeeinsatz 11. Zur weiteren Montage wird der Zugbolzen 12 des ersten Rohrstücks 10 dann in die Öffnung 213 des Stutzens 21 eingesteckt. Danach wird der Gewindestift 24 eingeschraubt. Wie bei den Ausführungsbeispielen der Fig. 1a - 4b weist der Gewindestift 24 eine Kegelspitze 241 auf und in dem Zugbolzen 12 sind Kegelbohrungen angeordnet. Das Zusammenspiel der Kegelspitze 241 und der Kegelbohrung 122 zieht die beiden Elemente aufeinander zu und befestigt das erste Rohrstück 10 so am Rohrprofil 20'.

Die Länge der Gewindestifte 24 ist so bemessen, dass sie im zusammengebauten Zustand der Anordnung über die Oberfläche der Rohrprofile 20' hervorstehen, wie dieses gut in Fig. 9d zu erkennen ist. Um die Gewindestifte 24 dann gemäß den hygienischen Vorschriften abzudichten, wird wiederum eine Hutmutter 28 mit entsprechendem Dichtungselement aufgeschraubt oder in einer alternativen Ausgestaltung als Hutkappe aufgesteckt.

### Bezugszeichen

- 10: erstes Rohrstück
- 101: Endabschnitt
- 11: Gewindeeinsatz
- 111: Gewindehülse
- 112: Federblatt
- 113: Aussparung
- 114: Spreizkeil
- 115: Gummiband
- 12: Zugbolzen
- 121: Außengewinde
- 122: Kegelbohrung
- 123: Kegelzahnrad
- 124: Kopf
- 125: Querbohrung
- 126: Schraube

- 20: weiteres Rohrstück
- 20': Rohrprofil
- 201: Endabschnitt
- 202: Bohrung (Querbohrung)
- 203: Bohrung (Sackloch)
- 21: Stutzen
- 211: Einsetzabschnitt
- 212: Bohrung
- 213: Öffnung
- 22: Rohrdichtung
- 23: Querbolzen
- 231: Durchgangsbohrung
- 232: Gewinderbohrung
- 233: Schlitz
- 234: Werkzeugschacht
- 235: exzentrischer Nocken
- 236: nicht-exzentrischer Abschnitt
- 237: Außengewindeabschnitt
- 238: Werkzeugaufnahme
- 24: Gewindestift
- 241: Kegelspitze
- 25: Dichtungsring
- 26: Rundkappenschraube
- 27: Exzenterring
- 28: Hutmutter

- 30: Verbinder
- 31: Standfuß
- 32: Kabel
- 33: Handwerkzeug
- 34: Werkzeug
- 35: Akkuschrauber

## Patentansprüche

1. Verbindungsanordnung für mindestens zwei Profilelemente, **dadurch gekennzeichnet, dass**
- ein erstes der Profilelemente ein Rohrstück (10) ist, in das ein Gewindeeinsatz (11) eingesetzt ist, an dem ein in Richtung einer Längsachse des Rohrstücks (10) zentral aus dem Rohrstück (10) herausragender Zugbolzen (12) befestigt ist, und
- ein zweites der Profilelemente ein Gegenlager aufweist, wobei
- der Zugbolzen (12) derart in das Gegenlager eingreift, dass die beiden Profilelemente in Längsrichtung gegeneinander verspannt sind.

2. Verbindungsanordnung nach Anspruch 1, bei der der Gewindeeinsatz (11) eine zentrale Gewindehülse (111) aufweist, von der mindestens ein Federblatt (112) geneigt absteht.

3. Verbindungsanordnung nach Anspruch 2, bei der mehrere der Federblätter (112) in mindestens zwei Ebenen an der Gewindehülse (111) angeordnet sind.

4. Verbindungsanordnung nach Anspruch 2 oder 3, bei der zumindest einige der Federblätter (112) Aussparungen (113) aufweisen, um mindestens ein Kabel (32) durchführen zu können.

5. Verbindungsanordnung nach Anspruch 1, bei der der Gewindeeinsatz (11) eine zentrale Gewindehülse (111) aufweist und vier radial nach außen abstehende Spreizkeile (114), die von dem Zugbolzen (12) und dem Gewindeeinsatz (111) durch schräge Kontaktflächen nach außen gedrückt werden, wenn der Zugbolzen (12) und die Gewindehülse durch eine axial verlaufende Schraube (126) aufeinander zu gespannt werden.

6. Verbindungsanordnung nach einem der Ansprüche 1 bis 5, bei der das zweite Profilelement einen Stutzen (11) in seinem Endabschnitt (201) aufweist, auf den das Rohrstück (10) aufgesteckt ist.

7. Verbindungsanordnung nach einem der Ansprüche 1 bis 5, bei der in einen Endabschnitt (201) das Profilelements ein Stutzen (21) mit einem Einsteckabschnitt (211) eingesteckt ist, auf den das Rohrstück (10) aufgesteckt ist.

8. Verbindungsanordnung nach einem der Ansprüche 1 bis 7, bei der zwischen den Profilelementen eine Rohrdichtung (22) angeordnet ist.

9. Verbindungsanordnung nach einem der Ansprüche 1 bis 8, bei der im Gegenlager eine Bohrung angeordnet aufweist, in die der Zugbolzen (12) eingeführt ist, wobei der Zugbolzen (12) durch einen in eine Gewindebohrung (232) eingeschraubten Gewindestift (24) festgelegt ist.

10. Verbindungsanordnung nach Anspruch 9, bei der der Gewindestift (24) eine Kegelspitze (241) aufweist, die in eine seitliche Kegelbohrung (122) des Zugbolzens (12) eingreift.

11. Verbindungsanordnung nach einem der Ansprüche 9 bis 10, bei der in die Gewindebohrung (232) eine Rundkappenschraube (26) mit untergelegtem Dichtungsring (25) eingeschraubt ist.

12. Verbindungsanordnung nach einem der Ansprüche 1 bis 11, bei der ein Querbolzen (23) das Gegenlager bildet, wobei der Querbolzen (23) quer zu einer Längsachse des zweiten Profilelements in mindestens eine Bohrung (202, 203) eingesetzt ist.

13. Verbindungsanordnung nach einem der Ansprüche 1 bis 12, bei der das zweite Profilelement ein weiteres Rohrstück (20) ist.

14. Verbindungsanordnung nach einem der Ansprüche 1 bis 13, bei der mindestens eines der Profilelemente Teil eines Verbinders (30) ist.

15. Verbindungsanordnung nach Anspruch 14, bei der der Verbinder (30) mehrere axial oder gewinkelt zueinander ausgerichtete Profilelemente aufweist.
